(19) **Europäisches Patentamt / European Patent Office / Office européen des brevets**

(11) **EP 4 475 254 A1**

(12) **EUROPEAN PATENT APPLICATION**

(43) Date of publication:
**11.12.2024  Bulletin 2024/50**

(21) Application number: **24180364.2**

(22) Date of filing: **06.06.2024**

(51) International Patent Classification (IPC):
$H01M\ 10/0566^{(2010.01)}$  $H01M\ 10/052^{(2010.01)}$
$C08F\ 218/08^{(2006.01)}$  $C09J\ 7/30^{(2018.01)}$
$C09J\ 9/00^{(2006.01)}$  $C09J\ 123/08^{(2006.01)}$
$C09K\ 21/06^{(2006.01)}$  $H01M\ 10/0587^{(2010.01)}$
$H01M\ 50/184^{(2021.01)}$  $H01M\ 50/186^{(2021.01)}$
$H01M\ 50/193^{(2021.01)}$  $H01M\ 50/197^{(2021.01)}$
$H01M\ 50/198^{(2021.01)}$

(52) Cooperative Patent Classification (CPC):
(C-Sets available)
H01M 10/0587; C09J 123/0853; C09J 133/066;
H01M 10/052; H01M 10/0566; H01M 50/184;
H01M 50/186; H01M 50/193; H01M 50/197;
H01M 50/198; C08F 220/1808; C09J 2203/33;
C09J 2301/414; C09J 2423/046; C09J 2431/006;

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.06.2023  KR 20230074175**
**23.11.2023  KR 20230164918**

(71) Applicant: **Samsung SDI Co., Ltd.**
**Yongin-si, Gyeonggi-do 17084 (KR)**

(72) Inventors:
• **CHO, Ik Hwan**
  **17084 Gyeonggi-do (KR)**
• **YOU, Jiwan**
  **17084 Gyeonggi-do (KR)**
• **WOO, Changhee**
  **17084 Gyeonggi-do (KR)**
• **PARK, Jinhwan**
  **17084 Gyeonggi-do (KR)**

(74) Representative: **Michalski Hüttermann & Partner Patentanwälte mbB**
**Kaistraße 16A**
**40221 Düsseldorf (DE)**

(54) **SEALING TAPE FOR RECHARGEABLE LITHIUM BATTERY AND RECHARGEABLE LITHIUM BATTERY INCLUDING THE SAME**

(57)  A sealing tape for a rechargeable lithium battery and a rechargeable lithium battery including the same are provided. The sealing tape includes a substrate layer and an adhesive layer on the substrate layer, wherein the substrate layer includes an ethylene vinyl acetate resin including an ethylene-derived repeating unit and a vinyl acetate-derived repeating unit, and based on 100 wt% of the ethylene vinyl acetate resin, a content (e.g., amount) of the repeating unit derived from the vinyl acetate is 5 wt% to 15 wt%.

EP 4 475 254 A1

(52) Cooperative Patent Classification (CPC): (Cont.)
C09J 2433/00

C-Sets
**C09J 133/066, C08K 5/29;**
C08F 220/1808, C08F 220/281;
C09J 2423/046, C09J 2431/006

**Description**

BACKGROUND

(a) Field

The present disclosure relates to sealing tapes for a rechargeable lithium battery and rechargeable lithium batteries including the same.

(b) Description of the Related Art

A cylindrical rechargeable lithium battery may be generally manufactured by a process (e.g., act or task) of manufacturing a wound-type or kind electrode assembly by winding a stack of a positive electrode, a separator, and a negative electrode; a process of storing (e.g., housing) the wound-type or kind electrode assembly in a cylindrical battery case; and a process of impregnating the wound-type or kind electrode assembly with an electrolyte solution and then sealing it (e.g., the battery case).

The wound-type or kind electrode assembly is made smaller than the cylindrical battery case so that it can be accommodated in the cylindrical battery case. As a result, a certain gap (e.g., gap of a certain size) exists between the cylindrical battery case and the wound-type or kind electrode assembly.

However, due to the presence of the gap, the wound-type or kind electrode assembly may rotate or flow (e.g., easily rotate or flow) inside the cylindrical battery case, resulting in deterioration of the performance of the rechargeable lithium battery (e.g., increase in internal resistance, damage to electrode tabs, and/or the like).

In this regard, a method has been proposed in which a sealing tape formed with an adhesive layer on a PET or PP substrate (hereinafter referred to as "related art sealing tape") is attached to the outer peripheral surface of the outermost layer of the wound-type or kind electrode assembly. However, in comparable sealing tapes, the PET or PP substrate shows little change in thickness even if (e.g., when) impregnated with an electrolyte solution, whereas the adhesive layer changes its thickness if (e.g., when) impregnated with an electrolyte solution.

Accordingly, the comparable sealing tape is prone to detachment from the wound-type or kind electrode assembly impregnated with electrolyte, and has limitations in suppressing or reducing rotation and/or movement of the wound-type or kind electrode assembly inside the cylindrical battery case.

Additionally, comparable sealing tapes cannot suppress or reduce abnormal phenomena such as heat generation and/or ignition of rechargeable lithium batteries.

SUMMARY

Aspects according to some embodiments are directed toward a novel sealing tape that effectively suppresses rotation and/or movement of the rolled electrode assembly (e.g., the wound-type or kind electrode assembly) inside the cylindrical battery case while exhibiting flame retardancy.

Aspects according to some embodiments are directed toward a rechargeable lithium battery including the novel sealing tape.

Additional aspects will be set forth in part in the description which follows and, in part, will be apparent from the description, or may be learned by practice of the presented embodiments of the disclosure.

According to some embodiments, a sealing tape for a rechargeable lithium battery includes a substrate layer and an adhesive layer on the substrate layer, wherein the substrate layer includes an ethylene vinyl acetate resin including an ethylene-derived repeating unit and a vinyl acetate-derived repeating unit, and the vinyl acetate-derived repeating unit is about 5 wt% to about 15 wt% in amount based on 100 wt% of the ethylene vinyl acetate resin.

According to some embodiments, a rechargeable lithium battery includes a cylindrical battery case; a wound-type electrode assembly accommodated in the cylindrical battery case; a sealing tape according to one or more embodiments between an outermost layer of the wound-type electrode assembly and an inner (e.g., lower) layer thereof; and an electrolyte solution impregnated in the wound-type electrode assembly and the sealing tape.

The sealing tape of one or more embodiments can effectively suppress or reduce rotation and/or movement of the wound-type or kind electrode assembly inside the cylindrical battery case, while exhibiting sufficient flame retardancy.

BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings:

FIG. 1 is a schematic view of a novel sealing tape 200 of one or more embodiments before impregnation with an electrolyte solution.
FIG. 2 is a schematic view of the novel sealing tape 200 of one or more embodiments after impregnation with an electrolyte solution.
FIG. 3 is a schematic view showing a rechargeable lithium battery 100 according to one or more embodiments.

DETAILED DESCRIPTION OF THE EMBODIMENTS

Hereinafter, specific embodiments will be described in more detail so that those of ordinary skill in the art can easily implement them. However, this disclosure may be embodied in many different forms and is not to be construed as being limited to the example embodiments set forth herein.

The terminology used herein is used to describe embodiments only, and is not intended to limit the present disclosure. Singular expressions include plural expressions unless the context clearly dictates otherwise.

As used herein, the term "combination thereof' may refer to a mixture, a stack, a composite, a copolymer, an alloy, a blend, or a reaction product of the constituents.

Herein, it should be understood that terms such as "comprises," "includes," or "have" are intended to designate the presence of an embodied feature, number, (e.g., act or task) step, element, or a (e.g., any suitable) combination thereof, but it does not preclude the possibility of the presence or addition of one or more other features, numbers, (e.g., act or task) steps, elements, or a (e.g., any suitable) combination thereof.

In the drawings, the thickness of layers, films, panels, regions, and/or the like, are exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

The term "layer" as used herein includes not only a shape formed on the whole surface if (e.g., when) viewed from a plan view, but also a shape formed on a partial surface.

The term "thickness" as used herein may be, for example, measured through photographs taken with an optical or electron microscope, such as a scanning electron microscope.

In addition, the average particle diameter may be measured by a suitable method (e.g., known to those skilled in the art), for example, may be measured by a particle size analyzer, or may be measured by a transmission electron microscopic image or a scanning electron microscopic image. In one or more embodiments, it is possible to obtain an average particle diameter value by measuring utilizing a dynamic light scattering method, performing data analysis, counting the number of particles for each particle size range, and calculating from this. Unless otherwise defined, the average particle diameter may refer to the diameter ($D_{50}$) of particles having a cumulative volume of 50 volume% in the particle size distribution. As used herein, if (e.g., when) a definition is not otherwise provided, the average particle diameter refers to the diameter ($D_{50}$) of particles having a cumulative volume of 50 volume% in the particle size distribution that is obtained by measuring the size (diameter or length of the major axis) of about 20 particles at random in a scanning electron microscope image. Also, unless otherwise defined, in the present disclosure, the term "particle diameter" refers to an average diameter if (e.g., when) particles are spherical and refers to an average major axis length if (e.g., when) particles are non-spherical.

(Sealing Tape)

According to some embodiments, a sealing tape for a rechargeable lithium battery includes a substrate layer and an adhesive layer on the substrate layer, wherein the substrate layer includes an ethylene vinyl acetate resin including an ethylene-derived repeating unit and a vinyl acetate-derived repeating unit, and based on 100 wt% of the ethylene vinyl acetate resin, a content (e.g., amount) of the repeating unit derived from the vinyl acetate is about 5 to about 15 wt%.

Content of Vinyl Acetate-derived Repeating Unit in Ethylene Vinyl Acetate Resin

The ethylene vinyl acetate resin, which includes the ethylene-derived repeating unit and the vinyl acetate-derived repeating unit, undergoes reactions such as radical recombination, transient crosslinking, Diels-Alder cycloaddition, and/or the like during thermal decomposition. As a result, the ethylene vinyl acetate resin delays combustion and even if the combustion occurs, forms clear char, while emitting less harmful gases. Accordingly, the ethylene vinyl acetate resin may be utilized as a substitute for halogen-based flame retardants.

However, if the content (e.g., amount) of the vinyl acetate-derived repeating unit is greater than about 15 wt% based on about 100 wt% of the ethylene vinyl acetate resin, the melting point of the ethylene vinyl acetate resin falls down to less than or equal to about 85 °C, causing a problem that the ethylene vinyl acetate resin melts under the flame retardancy evaluation conditions of rechargeable lithium batteries. Furthermore, if the content (e.g., amount) of the vinyl acetate-derived repeating unit is greater than about 15 wt% based on about 100 wt% of the ethylene vinyl acetate resin, the sealing tape may be excessively (or substantially) swollen according to (e.g., in response to) impregnation with an electrolyte solution and thus may be separated from the adhesive layer.

In contrast, if the content (e.g., amount) of the vinyl acetate-derived repeating unit is less than about 5 wt% based on about 100 wt% of the ethylene vinyl acetate resin, the flame retardant effect may be minimal or insufficient.

In contrast, if the content (e.g., amount) of the vinyl acetate-derived repeating unit is about 5 to about 15 wt% based on about 100 wt% of the ethylene vinyl acetate resin, because the melting point of the ethylene vinyl acetate resin may increase to greater than or equal to about 90 °C, the ethylene vinyl acetate resin may be stably maintained under the flame retardancy evaluation conditions of the rechargeable lithium batteries.

For example, the content (e.g., amount) of the vinyl acetate-derived repeating unit may be greater than or equal to about 5 wt%, greater than or equal to about 6 wt%, or greater than or equal to about 6.5 wt%; and less than or equal to about 15 wt%, less than or equal to 14 wt%, less than or equal to about 13 wt%, or less than or equal to about 12 wt% based on 100 wt% of the ethylene vinyl acetate resin.

Swelling Rate

The substrate layer and the adhesive layer may exhibit a different longitudinal swelling rate according to (e.g., in response to) impregnation with an electrolyte solution.

In the present specification, the "impregnation with an electrolyte solution" of a specific object refers to that the electrolyte solution penetrates into the specific object.

The longitudinal swelling rate (A) of the adhesive layer is measured in the following method.

The adhesive layer is cut into a size of a width*a length = 10 mm*10 mm to prepare a specimen for measuring the longitudinal swelling rate (a longitudinal length of the adhesive layer before the impregnation with an electrolyte solution, A1=10 mm). The specimen for measuring a longitudinal swelling rate is impregnated with an electrolyte solution, allowed to stand at room temperature for about one day, and then, measured with respect to a longitudinal length (a longitudinal length of the adhesive layer after the impregnation with an electrolyte solution, A2).

The longitudinal length (A1) of the adhesive layer before the impregnation with an electrolyte solution and the longitudinal length (A2) of the adhesive layer after the impregnation with an electrolyte solution are inserted (e.g., incorporated or plugged) into Equation 1 to obtain a longitudinal swelling rate (A) of the adhesive layer.

[Equation 1]

$$\text{Longitudinal swelling rate (A) of the adhesive layer} = (A2 - A1)/A1 \times 100$$

In Equation 1,

A1 is a longitudinal length of the adhesive layer before electrolyte impregnation (e.g., before impregnation with an electrolyte solution), and
A2 is a longitudinal length of the adhesive layer after impregnation with an electrolyte solution.

A longitudinal swelling rate (B) of the substrate layer is measured in the following method.

The substrate layer is cut into a size of a width *a length = 10 mm*10 mm to prepare a specimen for measuring a longitudinal swelling rate (a longitudinal length of a substrate layer before impregnation with an electrolyte solution, B1 =10 mm). The specimen for measuring a longitudinal swelling rate is impregnated with an electrolyte solution, sealed, and allowed to stand at room temperature for about one day to measure a length (a longitudinal length of the substrate after the impregnation with an electrolyte solution, B2).

The longitudinal length of the substrate layer before the impregnation with an electrolyte solution (B1) and the longitudinal length of the substrate after the impregnation with an electrolyte solution (B2) are inserted (e.g., incorporated or plugged) into Equation 2 to calculate a longitudinal swelling rate (B) of the substrate layer.

[Equation 2]

$$\text{Longitudinal swelling rate (B) of the substrate layer} = (B2 - B1)/B1 \times 100$$

In Equation 2,

B1 is a longitudinal length of the substrate layer before impregnation with an electrolyte solution, and
B2 is a longitudinal length of the substrate layer after impregnation with the electrolyte solution.

The electrolyte solution is not particularly limited, but may include a non-aqueous organic solvent and a lithium salt. In some embodiments, the non-aqueous organic solvent may be ethylene carbonate (EC) and dimethyl carbonate (DMC). In some embodiments, the non-aqueous organic solvent may further include propylene carbonate (PC) and fluorobenzene (FB); and the lithium salt may include $LiPF_6$.

Based on 100 volume% of the non-aqueous organic solvent, the ethylene carbonate (EC) may be included in an amount of about 10 to about 50 volume%, or about 20 to about 40 volume%; the dimethyl carbonate (DMC) may be included in an amount of about 40 to about 70 volume%, or about 50 to about 60 volume%; the propylene carbonate (PC) may be included in an amount of about 0.1 to about 15 volume%, or about 1 to about 10 volume%, and the fluorobenzene (FB) may be included in an amount of about 1 to about 20 volume%, or about 5 to about 15 volume%.

In the electrolyte solution, a molar concentration of the lithium salt may be about 0.8 to about 1.5 M, about 0.9 to about 1.3 M, or about 1.0 to about 1.2 M.

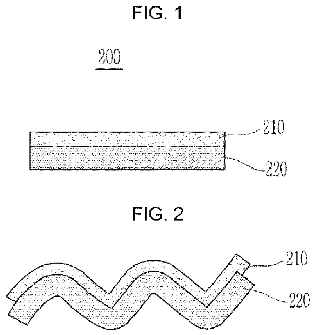

FIG. 1 is a schematic view of a novel sealing tape 200 of one or more embodiments before impregnation with an electrolyte solution. Before the novel sealing tape of one or more embodiments is impregnated with an electrolyte solution, two objects that are spaced and/or apart (e.g., apart, spaced, spaced apart, or separated) from each other can be effectively fixed by mutual balance between an adhesive force of the adhesive layer 220 and a fixing force of the substrate layer 210.

FIG. 2 is a schematic view of the novel sealing tape 200 of one or more embodiments after impregnation with an electrolyte solution. After the novel sealing tape of one or more embodiments is impregnated with the electrolyte solution, by balancing the longitudinal swelling rates that occur after the adhesive layer 220 and the substrate layer 210 are impregnated with the electrolyte solution, a three-dimensional shape that can fill the gap between the two objects that are spaced and/or apart (e.g., separated) from each other is realized.

Accordingly, the novel sealing tape of one or more embodiments effectively fills the gap between the cylindrical battery case and the wound-type or kind electrode assembly through a three-dimensional shape realized by electrolyte impregnation, thereby preventing or reducing rotation and/or movement of the wound-type or kind electrode assembly inside the cylindrical battery case, and performance degradation of the rechargeable lithium battery.

Although a more detailed description will be provided later, the novel sealing tape of one or more embodiments may be attached to the outer peripheral surface of the outermost layer of the wound-type or kind electrode assembly. In some embodiment, the novel sealing tape of one or more embodiments may be placed between the outermost layer of the wound-type or kind electrode assembly and the inner (e.g., lower) layer thereof (e.g., between an inner surface of the outermost layer of the wound-type or kind electrode assembly and the inner layer of the wound-type or kind electrode assembly that is immediately under the outermost layer).

In one or more embodiments, the adhesive layer may have an longitudinal swelling rate (A) according to Equation 1 within a range of about 110% to about 150%, about 110% to about 140%, about 110% to about 130%, or about 119% to about 125%.

In one or more embodiments, the substrate layer may have a longitudinal swelling rate (B) within a range of about 100% to about 130%, about 105% to about 120%, or about 110% to about 115% according to Equation 2.

If the above ranges are satisfied, a three-dimensional shape that can fill the gap between two objects that are spaced and/or apart (e.g., separated) from each other may be implemented by balancing the longitudinal swelling rates that occur after each of the adhesive layer 220 and the substrate layer 210 is impregnated with the electrolyte solution.

However, if the longitudinal swelling rate (A) of the adhesive layer 220 is less than the above ranges, it may not be enough to fix two objects that are spaced and/or apart (e.g., separated) from each other. If the longitudinal swelling rate (A) of the adhesive layer 220 exceeds the above ranges, a volume of the cylindrical battery case may be excessively (or substantially) expanded.

In contrast, if the longitudinal swelling rate (B) of the substrate layer 210 does not satisfy these ranges, the longitudinal swelling rate (B) may not be balanced with the longitudinal swelling rate (A) of the adhesive layer 220.

If the longitudinal swelling rate (A) of the adhesive layer and the longitudinal swelling rate (B) of the substrate layer satisfy the respective ranges, the longitudinal swelling rate (A) of the adhesive layer may be greater than the longitudinal swelling rate (B) of the substrate layer.

For example, a ratio (A/B) of the longitudinal swelling rate (A) of the adhesive layer to the longitudinal swelling rate (B) of the substrate layer may be greater than about 1, greater than or equal to about 1.01, greater than or equal to about 1.02, or greater than or equal to about 1.03; and less than or equal to about 1.15, less than or equal to about 1.13, less than or equal to about 1.1, or less than or equal to about 1.09.

If the ratio (A/B) of the longitudinal swelling rate (A) of the adhesive layer to the longitudinal swelling rate (B) of the substrate layer satisfies these ranges, the longitudinal swelling rate (A) of the adhesive layer 220 may be balanced with the longitudinal swelling rate (B) of the substrate layer 210.

Gel Fraction of Adhesive Layer

The adhesive layer may have a gel fraction of greater than or equal to about 70 wt%, greater than or equal to about 75 wt%, or greater than or equal to about 80 wt%. If the gel fraction of the adhesive layer is less than about 70 wt%, the adhesive layer may swell and disperse (e.g., excessively). The upper limit of the gel fraction of the adhesive layer is not particularly limited, but may be less than about 100 wt%.

The gel fraction of the adhesive layer may be obtained by the following method.

1 g (W0) of the specimen for gel fraction measurement is taken and is put into a 20 mL vial, 1,2,4-trichlorobenzene (about 10 mL) is added to sufficiently submerge the specimen for gel fraction measurement, and the specimen is heated at 130 °C for greater than or equal to about 2 hours. The heated solution is filtered and separated utilizing a 200-mesh wire mesh. Herein, the unfiltered and undissolved components are washed twice in xylene solution and then dried in a hot air oven at 120 °C for 12 hours. Finally, the dried undissolved components are measured (W), and the gel fraction is calculated utilizing Equation 3.

$$[Equation\ 3]$$

$$Gel\ fraction\ (\%) = (W/W0) \times 100.$$

In Equation 3, W is a weight of the dried undissolved component; and WO is a weight of the initial adhesive layer specimen, that is, 1 g.

Peel Strength of Adhesive Layer

The adhesive layer may achieve a suitable (e.g., specific) peel strength due to its adhesiveness.

For example, the adhesive layer may have a T-Peel peel strength of greater than or equal to about 60 gf/cm, greater than or equal to about 100 gf/cm, greater than or equal to about 200 gf/cm, greater than or equal to about 250 gf/cm, or greater than or equal to about 280 gf/cm, measured at a peeling speed of 60 mm/min and a peeling angle of 180 degrees, with respect to a substrate to which the adhesive layer is attached. The upper limit of the peel strength of the adhesive layer is not particularly limited, but may be less than or equal to about 360 gf/cm.

The peel strength of the adhesive layer can be measured by the following method.

As a substrate to be attached, two copper substrates with width*length*thickness=150 mm*10 mm*10 $\mu$m are prepared. Between the two copper substrates, an adhesive layer with a thickness of 100 mm*30 mm*10 $\mu$m (width * height * thickness) is placed to obtain a specimen for measuring peel strength. The specimen for measuring peel strength is pressurized utilizing an autoclave at a pressure of 3.5 bar and a temperature of 50 °C for 1000 seconds. At 25 °C, one copper substrate of the pressurized specimen for measuring peel strength is fixed to a universal physical property analyzer (product name: TA.XT_Plus Texture Analyzer, manufacturer: Stable Micro System), the other copper substrate is moved at a speed of 60 mm/min and the T-Peel peel strength is measured by pulling it.

Constituting Components of Adhesive Layer

The adhesive layer may include an acrylate-based adhesive.

The acrylate-based adhesive may be a copolymer of 2-ethylhexyl acrylate and 4-hydroxybutyl acrylate which are crosslinked with an isocyanate-based crosslinking agent.

(Rechargeable Lithium Battery)

A rechargeable lithium battery according to some embodiments includes a cylindrical battery case; a wound-type or kind electrode assembly accommodated in the cylindrical battery case; a novel sealing tape of one or more embodiments arranged between the outermost layer of the wound-type or kind electrode assembly and an inner (e.g.,

lower) layer thereof (e.g., between an inner surface of the outermost layer of the wound-type or kind electrode assembly and the inner layer of the wound-type or kind electrode assembly that is immediately under the outermost layer); and an electrolyte solution impregnated in the wound-type or kind electrode assembly and the sealing tape.

The sealing tape of one or more embodiments effectively fills the gap between the cylindrical battery case and the wound-type or kind electrode assembly when placed between the outermost layer of the wound-type or kind electrode assembly and an inner (e.g., lower) layer thereof (e.g., between the outermost layer of the wound-type or kind electrode assembly and the inner layer of the wound-type or kind electrode assembly that is immediately under the outermost layer) by having a three-dimensional shape realized by impregnation with the electrolyte solution. As a result, the sealing tape of one or more embodiments arranged between the outermost layer of the wound-type or kind electrode assembly and an inner (e.g., lower) layer thereof (e.g., between an inner surface of the outermost layer of the wound-type or kind electrode assembly and the inner layer of the wound-type or kind electrode assembly that is immediately under the outermost layer) suppresses the rotation and/or movement of the wound-type or kind electrode assembly inside the cylindrical battery case, and performance degradation of the rechargeable lithium battery may be prevented or reduced.

As described above, in some embodiments, the novel sealing tape of one or more embodiments may be attached to the outer peripheral surface of the outermost layer of the wound-type or kind electrode assembly. In some embodiments, it is desirably placed between the outermost layer of the wound-type or kind electrode assembly and an inner (e.g., lower) layer thereof (e.g., between an inner surface of the outermost layer of the wound-type or kind electrode assembly and the inner layer of the wound-type or kind electrode assembly that is immediately under the outermost layer). Compared to the former case, in the latter case, the capacity of the rechargeable lithium battery can be further improved by increasing the density of the positive electrode and/or negative electrode.

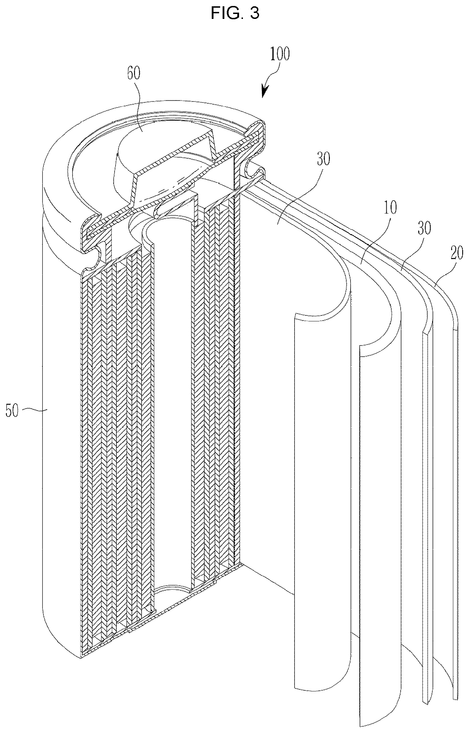

FIG. 3 is a schematic view showing a rechargeable lithium battery according to one or more embodiments.

Hereinafter, a rechargeable lithium battery of one or more embodiments will be described in more detail, excluding descriptions that overlap with the above-mentioned descriptions.

Wound-type or kind Electrode Assembly

The wound-type or kind electrode assembly may be a stack in which a positive electrode, a separator, and a negative electrode are sequentially stacked and wound so that the negative electrode may be the outermost layer.

Accordingly, the fixing force between the outermost layer (negative electrode) of the wound-type or kind electrode assembly and an inner (e.g., the lower) layer thereof (separator) may be strengthened.

A length of the sealing tape may be about 0.8 to about 1.5 times the circumference of the wound-type or kind electrode assembly.

A portion of the sealing tape may be exposed to the outside of the outermost layer of the wound-type or kind electrode assembly (e.g., a portion of the sealing tape may be between the outermost layer of the wound-type or kind electrode assembly and the battery case). For example, if the length of the sealing tape exceeds about 1 time compared to the circumference of the wound-type or kind electrode assembly, the sealing tape is exposed to the outside of the wound-type or kind electrode assembly by an excess portion of the length, and may effectively prevent or reduce the wound-type or kind electrode assembly from rotating or moving inside the cylindrical battery case.

Positive Electrode Active Material

The positive electrode active material may include lithiated intercalation compounds that can reversibly intercalate and deintercalate lithium ions. For example, the positive electrode active material may include one or more composite oxides of a metal selected from among cobalt, manganese, nickel, or a (e.g., any suitable) combination thereof, and lithium.

The composite oxide may be a lithium transition metal composite oxide, and non-limiting specific examples may include lithium nickel-based oxide, lithium cobalt-based oxide, lithium manganese-based oxide, a lithium iron phosphate-based compound, cobalt-free lithium nickel-manganese-based oxide, or a (e.g., any suitable) combination thereof.

As an example, the positive electrode active material may be a high nickel-based positive electrode active material having a nickel content (e.g., amount) of greater than or equal to about 80 mol% based on 100 mol% of a metal excluding lithium in the lithium transition metal composite oxide. The content (e.g., amount) of nickel in the high nickel-based positive electrode active material may be greater than or equal to about 85 mol%, greater than or equal to about 90 mol%, greater than or equal to about 91 mol%, or greater than or equal to about 94 mol% and less than or equal to about 99 mol% based on 100 mol% of a metal excluding lithium in the lithium transition metal composite oxide. The high-nickel-based positive electrode active material may achieve high capacity and may be applied to high-capacity, high-density rechargeable lithium batteries.

As a non-limiting more specific example, a compound represented by any one of (e.g., any one selected from among) the following chemical formulas can be utilized. $Li_aA_{1-b}X_bO_{2-c}D_c$ ($0.90 \leq a \leq 1.8$, $0 \leq b \leq 0.5$, $0 \leq c \leq 0.05$);

$Li_aMn_{2-b}X_bO_{4-c}D_c$ ($0.90 \le a \le 1.8$, $0 \le b \le 0.5$, $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, $0 < \alpha < 2$); $Li_aNi_{1-b-c}Mn_bX_cO_{2-\alpha}D_\alpha$ ($0.90 \le a \le 1.8$, $0 \le b \le 0.5$, $0 \le c \le 0.5$, $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, $0 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $Li_{(3-f)}Fe_2(PO_4)_3$ ($0 < f \le 2$); and $Li_aFePO_4$ ($0.90 \le a \le 1.8$).

In the above chemical formulas, A is Ni, Co, Mn, or a (e.g., any suitable) combination thereof; X is Al, Ni, Co, Mn, Cr, Fe, Mg, Sr, V, a rare earth element, or a (e.g., any suitable) combination thereof; D is O, F, S, P, or a (e.g., any suitable) combination thereof; G is Al, Cr, Mn, Fe, Mg, La, Ce, Sr, V, or a (e.g., any suitable) combination thereof; Q is Ti, Mo, Mn, or a (e.g., any suitable) combination thereof; Z is Cr, V, Fe, Sc, Y, or a (e.g., any suitable) combination thereof; and $L^1$ is Mn, Al or a (e.g., any suitable) combination thereof.

Positive Electrode

The positive electrode for a rechargeable lithium battery may include a current collector and a positive electrode active material layer on the current collector. The positive electrode active material layer includes a positive electrode active material and may further include a binder and/or a conductive material.

An amount of the positive electrode active material may be about 90 wt% to about 99.5 wt% based on 100 wt% of the positive electrode active material layer.

In one or more embodiments, the positive electrode active material layer may further include a binder and a conductive material. Herein, amounts of the binder and the conductive material may be about 0.5 wt% to about 5 wt%, respectively, based on 100 wt% of the positive electrode active material layer.

The binder serves to attach the positive electrode active material particles (e.g., well) to each other and also to attach the positive electrode active material (e.g., well) to the current collector. Examples of the binder may include (e.g., may be) polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, or a (e.g., any suitable) combination thereof, but the present disclosure is not limited thereto.

The conductive material may be utilized to impart conductivity (e.g., electrical conductivity) to the electrode and any material that does not cause chemical change (e.g., does not cause an undesirable chemical change in the rechargeable lithium battery) and conducts electrons can be utilized in the battery. Examples of the conductive material may include a carbon-based material such as natural graphite, artificial graphite, carbon black, acetylene black, ketjen black, a carbon fiber, a carbon nanofiber, and/or carbon nanotube; a metal-based material including copper, nickel, aluminum, silver, and/or the like, in a form of a metal powder or a metal fiber; a conductive polymer such as a polyphenylene derivative; and/or a mixture thereof.

In some embodiments, Al may be utilized as the current collector, but the present disclosure is not limited thereto.

Negative Electrode Active Material

The negative electrode active material may be a material that reversibly intercalates/deintercalates lithium ions, a lithium metal, a lithium metal alloy, a material capable of doping and dedoping lithium, or a transition metal oxide. The crystalline carbon may be graphite such as irregular-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \le 2$), a Si-Q alloy (wherein Q is selected from among an alkali metal, an alkaline-earth metal, a Group 13 element, a Group 14 element (excluding Si), a Group 15 element, a Group 16 element, a transition metal, a rare earth element, or a (e.g., any suitable) combination thereof, and may be selected from among, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a (e.g., any suitable) combination thereof). The Sn-based negative electrode active material may include Sn, $SnO_x$ ($0 < x \le 2$, e.g., $SnO_2$), a Sn alloy, or a (e.g., any suitable) combination thereof.

The silicon-carbon composite may be a composite of silicon and amorphous carbon. An average particle diameter ($D_{50}$) (e.g., secondary particles) of the silicon-carbon composite particles may be, for example, about 0.5 μm to about 20 μm. According to one or more embodiments, the silicon-carbon composite may be in a form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be between the silicon primary particles, and, for example, the silicon primary particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core. The crystalline carbon may be artificial graphite, natural graphite, or a (e.g., any suitable) combination thereof. The amorphous carbon may include soft carbon or hard carbon, a mesophase pitch carbonization product, and calcined coke.

If (e.g., when) the silicon-carbon composite includes silicon and amorphous carbon, a content (e.g., amount) of silicon may be about 10 wt% to about 50 wt% and the content (e.g., amount) of amorphous carbon may be about 50 wt% to about 90 wt% based on 100 wt% of the silicon-carbon composite. In one or more embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

In some embodiments, a thickness of the amorphous carbon coating layer may be about 5 nm to about 100 nm. An average particle diameter ($D_{50}$) of the silicon particles (primary particles) may be about 10 nm to about 1 $\mu$m, or about 10 nm to about 200 nm. The silicon particles may exist (may be present) as silicon alone, in the form of a silicon alloy, or in an oxidized form. The oxidized form of silicon may be represented by $SiO_x$ ($0<x\leq2$). Herein, the atomic content (e.g., amount) ratio of Si:O, which indicates a degree of oxidation, may be about 99:1 to about 33:67. As utilized herein, if (e.g., when) a definition is not otherwise provided, an average particle diameter ($D_{50}$) indicates a particle where an accumulated volume is about 50 volume% in a particle size distribution.

The Si-based negative electrode active material or the Sn-based negative electrode active material may be utilized in combination with a carbon-based negative electrode active material. When utilizing a mixture of Si-based negative electrode active material or Sn-based negative electrode active material and carbon-based negative electrode active material, a mixing ratio may be about 1:99 to about 90:10 by weight.

Negative Electrode

The negative electrode for a rechargeable lithium battery includes a current collector, and a negative electrode active material layer on the current collector. The negative electrode active material layer includes a negative electrode active material and may further include a binder and/or a conductive material.

A content (e.g., amount) of the negative electrode active material may be about 95 wt% to about 99.5 wt% based on 100 wt% of the negative electrode active material layer. A content (e.g., amount) of the binder may be about 0.5 wt% to about 5 wt% based on 100 wt% of the negative electrode active material layer. A content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder may serve to attach the negative electrode active material particles (e.g., well) to each other and also to attach the negative electrode active material (e.g., well) to the current collector. The binder may include a non-aqueous binder, an aqueous binder, a dry binder, or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a (e.g., any suitable) combination thereof.

When an aqueous binder is utilized as the negative electrode binder, it may further include a cellulose-based compound capable of imparting viscosity. The cellulose-based compound includes one or more of carboxylmethyl cellulose, hydroxypropylmethyl cellulose, methyl cellulose, or alkali metal salts thereof. The alkali metal may be Na, K, or Li.

The dry binder may be a polymer material capable of being fiberized (e.g., taking the form of a fiber), and may be, for example, polytetrafluoroethylene, polyvinylidene fluoride, polyvinylidene fluoride-hexafluoropropylene copolymer, polyethylene oxide, or a (e.g., any suitable) combination thereof.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, a carbon nanofiber, a carbon nanotube, and/or the like; a metal-based material such as copper, nickel, aluminum silver, and/or the like in a form of a metal powder or a metal fiber; a conductive polymer such as a polyphenylene derivative; and/or a (e.g., any suitable) mixture thereof.

The negative electrode current collector may include one selected from among a copper foil, a nickel foil, a stainless steel foil, a titanium foil, a nickel foam, a copper foam, a polymer substrate coated with a conductive metal, or a (e.g., any suitable) combination thereof, but the present disclosure is not limited thereto.

Electrolyte Solution

The electrolyte solution for a rechargeable lithium battery includes a non-aqueous organic solvent and a lithium salt.

The non-aqueous organic solvent serves as a medium for transmitting (e.g., transporting) ions taking part in the electrochemical reaction of a battery.

The non-aqueous organic solvent may be a carbonate-based, ester-based, ether-based, ketone-based, alcohol-based solvent, aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone(valerolactone), caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane and/or 1,4-dioxolane, sulfolanes, and/or the like.

The non-aqueous organic solvent may be utilized alone or in a mixture of two or more types (kinds), and if (e.g., when) two or more types (kinds) are utilized in a mixture, a mixing ratio can be appropriately or suitably adjusted according to the desired or suitable battery performance, which may be widely understood by skilled person working in the field.

Additionally, if (e.g., when) utilizing a carbonate-based solvent, cyclic carbonate and chain carbonate can be mixed and utilized, and cyclic carbonate and chain carbonate can be mixed at a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and utilized in a volume ratio of about 1:1 to about 30:1.

The electrolyte may further include vinylethyl carbonate, vinylene carbonate, or an ethylene carbonate-based compound in order to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of a lithium salt may include one or more selected from among $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$, wherein x and y are integers from 1 to 20, lithium trifluoromethane sulfonate, lithium tetrafluoroethanesulfonate, lithium difluorobis(oxalato)phosphate (LiDFOB), and lithium bis(oxalato)borate (LiBOB).

A concentration of lithium salt may be utilized within the range of about 0.1 M to about 2.0 M. If the concentration of lithium salt is within the above range, the electrolyte solution has appropriate or suitable ionic conductivity and viscosity, and thus excellent or suitable performance can be achieved and lithium ions can move effectively.

Separator

Depending on the type or kind of the rechargeable lithium battery, a separator may be present between the positive electrode and the negative electrode. The separator may include polyethylene, polypropylene, polyvinylidene fluoride, a multilayer film of two or more layers thereof, a mixed multilayer film (such as a polyethylene/polypropylene two-layer separator, polyethylene/polypropylene/polyethylene three-layer separator, and/or polypropylene/polyethylene/polypropylene three-layer separator), and/or the like.

The separator may include a porous substrate and a coating layer including an organic material, an inorganic material, or a (e.g., any suitable) combination thereof on a (e.g., one or both surfaces or sides (e.g., opposite surfaces)) of the porous substrate.

The porous substrate may be a polymer film formed of any one selected among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g., TEFLON), and/or a copolymer or mixture of two or more thereof.

The porous substrate may have a thickness of about 1 micron or micrometer ($\mu$m) to about 40 $\mu$m, for example, about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acryl-based copolymer including a first structural unit derived from (meth)acrylamide, and a second structural unit including at least one of a structural unit derived from (meth)acrylic acid or (meth)acrylate or a structural unit derived from (meth)acrylamidosulfonic acid or a salt thereof.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, or a (e.g., any suitable) combination thereof, but the present disclosure is not limited thereto. An average particle diameter ($D_{50}$) of the inorganic particles may be about 1 nanometer (nm) to about 2000 nm, for example, about 100 nm to about 1000 nm, or about 100 nm to about 700 nm.

The organic material and the inorganic material may be mixed in one coating layer or may exist in a stacked form of a coating layer including an organic material and a coating layer containing an inorganic material.

A thickness of the coating layer may be about 0.5 $\mu$m to about 20 $\mu$m, for example, about 1 $\mu$m to about 10 $\mu$m, or about 1 $\mu$m to about 5 $\mu$m.

Rechargeable Lithium Battery

The rechargeable lithium battery may be classified into cylindrical, prismatic, pouch, or coin-type or kind batteries, and/or the like, depending on its shape. FIG. 3 is a schematic view showing a rechargeable lithium battery according to one or more embodiments. Referring to FIG. 3, the rechargeable lithium battery 100 may include an electrode assembly including a separator 30 between a positive electrode 10 and a negative electrode 20, and a case 50 in which the electrode assembly is housed. The positive electrode 10, the negative electrode 20, and the separator 30 may be impregnated with an electrolyte solution. The rechargeable lithium battery 100 may include a sealing member 60 that seals the case 50 as shown in FIG. 3.

Example 1

(1) Preparation of Substrate layer

As an ethylene vinyl acetate resin including an ethylene-derived repeating unit and a vinyl acetate-derived repeating unit, an ethylene vinyl acetate resin (Product name: EF320, Manufacturer: LG Chem) including 6.5 wt% of the vinyl acetate-derived repeating unit based on 100 wt% of the ethylene vinyl acetate resin was prepared.

Subsequently, 10 parts by weight of acryloyl diphosphoric acid (ADP) based on 100 parts by weight reference of the ethylene vinyl acetate resin was added thereto and then, extruded in an extruder to obtain a 20 $\mu$m-thick substrate layer.

(2) Preparation of Adhesive Layer

85 parts by weight of ethyl acetate and 15 parts by weight of toluene as a solvent; 95 parts by weight of 2-ethylhexyl acrylate and 5 parts by weight of 4-hydroxybutylacrylate as monomers; and 0.1 part by weight of 2,2'-azobisisobutyronitrile as a polymerization initiator were mixed, gently stirred after being substituted with a nitrogen atmosphere, and polymerized for 8 hours while maintaining the temperature at 55 °C. to obtain an acrylic prepolymer with a weight average molecular weight (Mw) of 1,300,000 g/mol and Mw/Mn = 1.84.

0.05 parts by weight of a trimethylolpropane adduct of xylylene diisocyanate (Product name: Takenate D110N, XDI, manufacturer: Mitsui Chemicals) was added to 100 parts by weight of the acrylic prepolymer to prepare an acrylic adhesive composition.

The acrylic adhesive composition was coated on the release film and dried at 135 °C for 3 minutes to obtain an adhesive layer with a thickness of 15 $\mu$m.

(3) Manufacturing of Sealing Tape

The adhesive layer was transferred onto the hard coating layer to prepare a sealing tape.

(4) Manufacturing of Rechargeable Lithium Battery Cells

$LiNi_{0.75}Mn_{0.23}Al_{0.02}O_2$ as a positive electrode active material, polyvinylidene fluoride as a binder, and acetylene black as a conductive material were mixed in a weight ratio of 96:3:1 and dispersed in N-methyl pyrrolidone to prepare a positive electrode active material slurry.

The positive electrode active material slurry was coated on a 15 $\mu$m-thick Al foil, dried at 100 °C, and then pressed to manufacture a positive electrode.

Artificial graphite was utilized as the negative electrode active material, and the negative electrode active material, a styrene-butadiene rubber binder, and carboxymethyl cellulose were mixed at a weight ratio of 98:1:1, and dispersed in distilled water to prepare a negative electrode active material slurry.

The negative electrode active material slurry was coated on a 10 $\mu$m-thick Cu foil, dried at 100 °C, and then pressed to produce a negative electrode.

A separator made of polyethylene (thickness: 10 $\mu$m) was placed between the positive electrode and the negative electrode to manufacture a stack, and the stack was wound so that the negative electrode was the outermost layer to manufacture a wound-type or kind electrode assembly (circumference: 64 mm). The sealing tape was cut to a length of (70 mm) and placed in the gap between the outermost layer (negative electrode) and the inner (e.g., lower) layer (separator) of the wound-type or kind electrode assembly. Herein, a portion (60 mm) of the sealing tape was exposed to the outside of the wound-type or kind electrode assembly. That is, a portion, e.g., 4 mm, of the sealing tape was placed in between the negative electrode (the outermost layer of the wound-type or kind electrode assembly) and the separator (the inner layer immediately under the outermost layer of the wound-type or kind electrode assembly), and the rest of the sealing tape, e.g., 60 mm, was exposed to the outside of the wound-type or kind electrode assembly, e.g., by wrapping around the outer surface of the negative electrode (the outermost layer of the wound-type or kind electrode assembly).

The wound-type or kind electrode assembly on which the sealing tape was placed was stored in a cylindrical battery case, an electrolyte solution was injected, and the battery case was sealed to obtain a rechargeable lithium battery cell.

The electrolyte solution was a 1.1 M concentration of $LiPF_6$ dissolved in a mixed solvent of ethylene carbonate (EC), dimethyl carbonate (DMC), propylene carbonate (PC), and fluorobenzene (FB), in a volume ratio of EC:DMC:PC:FB=30:55:5:10.

Example 2

A sealing tape and a rechargeable lithium battery cell were manufactured in substantially the same manner as in Example 1 except that an ethylene vinyl acetate resin having 9.5 wt% of a vinyl acetate-derived repeating unit based on 100 wt% of the ethylene vinyl acetate resin (Product name: EVA 2240, Manufacture: Hanwha Solutions) was utilized.

Example 3

A sealing tape and a rechargeable lithium battery cell were manufactured in substantially the same manner as in Example 1 except that an ethylene vinyl acetate resin having 12 wt% of a vinyl acetate-derived repeating unit based on 100 wt% of the ethylene vinyl acetate resin (Product name: EVA2250, Manufacture: Hanwha Solutions) was utilized.

Example 4

A sealing tape and a rechargeable lithium battery cell were manufactured in substantially the same manner as in Example 1 except that the thickness of the adhesive layer was changed to 10 $\mu$m.

Example 5

A sealing tape and a rechargeable lithium battery cell were manufactured in substantially the same manner as in Example 1 except that the thickness of the adhesive layer was changed to 20 $\mu$m.

Comparative Example 1

A sealing tape and a rechargeable lithium battery cell were manufactured in substantially the same manner as in Example 1 except that a 20 $\mu$m-thick PET film was utilized as a substrate layer.

Comparative Example 2

A sealing tape and a rechargeable lithium battery cell were manufactured in substantially the same manner as in Example 1 except that an ethylene vinyl acetate resin having 3.5 wt% of an ethylene-derived repeating unit based on 100 wt% of the ethylene vinyl acetate resin (Product name: EF221, Manufacture: LG Chem) was utilized.

Comparative Example 3

A sealing tape and a rechargeable lithium battery cell were manufactured in substantially the same manner as in Example 1 except that an ethylene vinyl acetate resin having 18 wt% of an ethylene-derived repeating unit based on 100 wt% of the ethylene vinyl acetate resin (Product name: EVA1157, Manufacture: Hanwha Solutions) was utilized.

Evaluation Example 1: swelling rate

(1) Swelling Rate of Adhesive Layer

Each of the adhesive layers of Examples 1 to 5 and Comparative Examples 1 to 3 was cut into a size of a width*a length = 10 mm*10 mm to prepare a specimen for measuring a longitudinal swelling rate (a longitudinal length of each adhesive layer before impregnation with an electrolyte solution, A1=10 mm). The specimen for measuring a longitudinal swelling rate was impregnated with an electrolyte solution, sealed, and allowed to stand at room temperature for 1 day and then, measured with respect to a longitudinal length (a longitudinal length of each adhesive layer after impregnation with an electrolyte solution, A2).
The electrolyte solution had the same composition as that in Example 1.
The longitudinal length (A1) of the adhesive layer before the impregnation with an electrolyte solution and the longitudinal length (A2) after the impregnation with an electrolyte solution were inserted (incorporated) into Equation 1 to calculate a longitudinal swelling rate (A) of the adhesive layer. The results are shown in Tables 1 and 2.

[Equation 1]

$$\text{Longitudinal swelling rate (A) of the adhesive layer} = (A2 - A1)/A1 \times 100$$

In Equation 1,

A1 is a longitudinal length of the adhesive layer before electrolyte impregnation, and
A2 is a longitudinal length of the adhesive layer after impregnation with an electrolyte solution.

(2) Swelling Rate of Substrate Layer

Each of the substrate layers of Examples 1 to 5 and Comparative Examples 1 to 3 was cut into a size of a width*a length = 10 mm*10 mm to prepare a specimen for measuring a longitudinal swelling rate (a longitudinal length of each substrate layer before impregnation with the electrolyte solution, B1=10 mm). The specimen for measuring a longitudinal swelling rate was impregnated with an electrolyte solution, sealed, allowed to stand at room temperature for 1 day and then, measured with respect to a length (a longitudinal length of each substrate layer after impregnation with an electrolyte solution, B2).
The electrolyte solution had the same composition as that in Example 1.
The longitudinal length (B1) of the substrate layer before the impregnation with the electrolyte solution and the longitudinal length (B2) of the substrate layer after the impregnation with the electrolyte solution were inserted into Equation 2 to calculate a longitudinal swelling rate (B) of the substrate layer.

[Equation 2]

$$\text{Longitudinal swelling rate (B) of the substrate layer} = (B2 - B1)/B1 \times 100$$

In Equation 2,

B1 is a longitudinal length of the substrate layer before impregnation with an electrolyte solution, and
B2 is a longitudinal length of the substrate layer after impregnation with the electrolyte solution.

(3) A/B Ratio

In addition, ratios of A/B were obtained from (1) and (2) of Evaluation Example 1, and is shown in Tables 1 and 2.

Evaluation Example 2: Peel Strength of Adhesive Layer

The adhesive layers of Examples 1 to 5 and the adhesive layers of Comparative Examples 1 to 3 were each prepared to a size of 100 mm*30 mm*10 $\mu$m (width*length*thickness). Additionally, as substrates to be attached, two copper substrates with width*length*thickness=150 mm*10 mm*10 $\mu$m were prepared.

Each of the adhesive layers was placed between the two copper substrates to obtain a specimen for measuring peel strength. The specimen for measuring peel strength were pressurized utilizing an autoclave at a pressure of 3.5 bar and a temperature of 50 °C for 1000 seconds. At 25 °C, one copper substrate of the pressurized specimen for measuring peel strength was fixed to a universal physical property analyzer (product name: TA.XT_Plus Texture Analyzer, manufacturer: Stable Micro System), and the other copper substrate was pulled at a speed of 60 mm/min to measure the T-Peel peel strength. The results are shown in Tables 1 and 2.

Evaluation Example 3: Gel fraction of Adhesive Layer

Each of the adhesive layers of Examples 1 to 5 and Comparative Examples 1 to 3 was taken by 1 g (W0) as a specimen for measuring a gel fraction and placed in a 20 mL vial, and 1,2,4-trichlorobenzene (about 10 mL) was added thereto to sufficiently submerge the specimen and then, heated at 130 °C for 2 hours or more. The heated solution was filtered and separated with a 200-mesh wire mesh. Herein, unfiltered undissolved components therefrom were washed twice with a xylene solution and dried at 120 °C in a hot air oven for 12 hours. Finally, the dried undissolved components were measured (W), which was utilized according to Equation 3 to obtain the gel fraction. The results are shown in Tables 1 and 2.

[Equation 3]

$$\text{Gel fraction (\%)} = (W/W0) \times 100.$$

In Equation 3, W is a weight of the dried undissolved components; and WO is a weight of the initial adhesive layer specimen, that is, 1 g.

Evaluation Example 4: Ability to Implement Three-dimensional Shape of Sealing Tape

The rechargeable lithium battery cells of Examples 1 to 5 and Comparative Examples 1 to 3 were stored at room temperature for 1 day. Subsequently, the rechargeable lithium battery cells were dissembled to take out the electrode assembly to evaluate each sealing tape arranged in a gap between the outermost layer (negative electrode) and its inner (lower) layer (separator) of the wound-type or kind electrode assembly according to the following criteria. The results are shown in Tables 1 and 2.

○: A three-dimensional shape shown in FIG. 2 was observed
X: no three-dimensional shape shown in FIG. 2 was observed, but detached from the wound-type or kind electrode assembly

Evaluation Example 5: Gap filling Ability of Sealing Tape

Each of the sealing tapes of Examples 1 to 5 and Comparative Examples 1 to 3 were evaluated with respect to gap filling ability in the following method, and the results are shown in Tables 1 and 2.

The gap filling ability of the sealing tapes was evaluated in a method of evaluating flow prevention ability of the electrode assembly, and the flow prevention ability of the electrode assembly were evaluated in a residual vibration evaluation method and a residual impact evaluation method.

(1) The residual vibration evaluation method: performed according to an UN38.3 standard vibration test, wherein if power of the rechargeable lithium battery cells was not reduced after the evaluation, it was judged as a disconnection of one terminal (e.g., no short-circuit).
(2) The residual impact evaluation method: after inserting the rechargeable lithium battery cells into an octagonal cylinder and rotating them, if power of the cells was not reduced after a set or predetermined period of time, it was judged that a terminal was cut by a flow (e.g., no short-circuit).

The results according to the two methods were judged according to the following criteria.

∘: Power was measured after the residual vibration and residual impact evaluations
X: No power was measured after the residual vibration and residual impact evaluations

Evaluation Example 6: Evaluation of Flame retardancy

Each of the sealing tapes according to Examples 1 to 5 and Comparative Examples 1 to 3 was prepared into an 1/16-inch thick specimen to evaluate flame retardancy according to an UL 94 measurement method as follows.

First, after applying a 20 mm-high flame to the specimens for 10 seconds, combustion time (t1) thereof was measured, while its combustion pattern was recorded. Subsequently, if (e.g., when) the combustion was completed after the primary (first) flame contact, combustion time (t2) and glowing time (t3) after another flame contact for 10 seconds were measured, while its combustion pattern was recorded. The same test was repeated five times by utilizing other (additional) specimens with the same size to judge whether or not spark-generating particles were dropped therefrom and thus the flame retardancy was evaluated as O (no significant spark generation) or X (with significant spark generation).

(Table 1)

| | | Example | | | | |
|---|---|---|---|---|---|---|
| | | 1 | 2 | 3 | 4 | 5 |
| Substrate layer | VA content (wt%) | 6.5 | 9.5 | 12 | 6.5 | 6.5 |
| | Melting temp. | 102 | 98 | 94 | 102 | 102 |
| | Initial thickness ($\mu$m) | 20 | 20 | 20 | 20 | 20 |
| | Swelling rate (B, %) | 110 | 115 | 120 | 115 | 115 |
| Adhesive layer | Initial thickness ($\mu$m) | 15 | 15 | 15 | 10 | 20 |
| | Swelling rate (A, %) | 119 | 119 | 125 | 125 | 125 |
| | Gel fraction (%) | 88 | 88 | 88 | 88 | 88 |
| | Peel strength (gf/cm) | 330 | 320 | 340 | 280 | 355 |
| A/B | | 1.08 | 1.03 | 1.04 | 1.09 | 1.09 |
| Ability to implement three-dimensional shape | | ○ | ○ | ○ | ○ | ○ |
| Gap filling ability | | ○ | ○ | ○ | ○ | ○ |
| Flame retardancy | | ○ | ○ | ○ | ○ | ○ |

(Table 2)

| | | Comparative Example | | |
| --- | --- | --- | --- | --- |
| | | 1 | 2 | 3 |
| Substrate layer | VA content (wt%) | - (PET) | 3.5 | 18 |
| | Melting temp. | - | 107 | 80 |
| | Initial thickness ($\mu$m) | 20 | 20 | 20 |
| | Swelling rate (B, %) | 0 | 108 | 148 |
| Adhesive layer | Initial thickness ($\mu$m) | 15 | 15 | 15 |
| | Swelling rate (A, %) | 117 | 130 | 130 |
| | Gel fraction (%) | 88 | 88 | 88 |
| | Peel strength (gf/cm) | 360 | 340 | 310 |
| A/B | | - | 1.20 | 0.88 |
| Ability to implement three-dimensional shape | | X | X | X |
| Gap filling ability | | X | X | X |
| Flame retardancy | | X | X | X |

In Tables 1 and 2, the "VA content" indicates a content (e.g., amount) of a vinyl acetate-derived repeating unit based on 100 wt% of an ethylene vinyl acetate resin.

In addition, in Tables 1 and 2, if A/B is a decimal, it is rounded to three decimal places.

Comprehensive Evaluation Results

Referring to Evaluation Examples 1 to 5, the sealing tape of one or more embodiments represented by Examples 1 to 5 arranged between the outermost layer and its inner (lower) layer of the wound-type or kind electrode assembly, in which a three-dimensional shape was realized by the impregnation with an electrolyte solution, effectively filled (charged) a gap between the cylindrical battery case and the wound-type or kind electrode assembly.

As a result, the sealing tape of one or more embodiments arranged between the outermost layer and its inner (lower) layer of the wound-type or kind electrode assembly may suppress or reduce rotation and/or movement of the wound-type or kind electrode assembly in the cylindrical battery case and prevent or reduce performance degradation of the rechargeable lithium battery cell.

In addition, referring to Evaluation Example 6, the sealing tape of one or more embodiments represented by Examples 1 to 5, in which an ethylene vinyl acetate resin including 5 wt% to 15 wt% of a vinyl acetate-derived repeating unit was applied to a substrate layer, exhibited excellent or suitable flame retardancy.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

In present disclosure and unless otherwise defined, "not including a or any 'component'" "excluding a or any 'component'", "'component'-free", and/or the like refers to that the "component" not being added, selected or utilized as a component in the formula/composition/structure, but the "component" of less than a suitable amount may still be included due to other impurities and/or external factors.

Here, unless otherwise defined, the listing of steps, tasks, or acts in a particular order should not necessarily means that the invention or claims require that particular order. That is, the general rule that unless the steps, tasks, or acts of a method (e.g., a method claim) actually recite an order, the steps, tasks, or acts should not be construed to require one.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this disclosure has been described in connection with what is presently considered to be practical example embodiments, it is to be understood that present disclosure is not limited to the disclosed embodiments, but, on the contrary, is intended to cover various modifications and equivalent arrangements included within the spirit and scope of the appended claims, and equivalents thereof.

<Reference Numerals >

| | | | |
|---|---|---|---|
| 100: | rechargeable lithium battery | | |
| 10: | positive electrode | 20: | negative electrode |
| 30: | separator | | |
| 50: | case | 60: | sealing member |
| 200: | sealing tape | | |
| 210: | substrate layer | 220: | adhesive layer |

**Claims**

1. A sealing tape (200) comprising:

   a substrate layer (210), and
   an adhesive layer (220) on the substrate layer (210),
   wherein the substrate layer (210) comprises an ethylene vinyl acetate resin comprising an ethylene-derived repeating unit and a vinyl acetate-derived repeating unit,
   the vinyl acetate-derived repeating unit is 5 wt% to 15 wt% in amount based on 100 wt% of the ethylene vinyl acetate resin, and
   the sealing tape (200) is for a rechargeable lithium battery (100).

2. The sealing tape (200) as claimed in claim 1, wherein the substrate layer (210) and the adhesive layer (220) have different longitudinal swelling rates in response to impregnation with an electrolyte solution.

3. The sealing tape (200) as claimed in claim 1 or 2, wherein

   the adhesive layer (220) has a longitudinal swelling rate (A) of 110% to 150% according to Equation 1,
   the substrate layer (210) has a longitudinal swelling rate (B) of 100% to 130% according to Equation 2,
   the longitudinal swelling rate (A) of the adhesive layer (220) is greater than the longitudinal swelling rate (B) of the substrate layer (210):

[Equation 1]

$$\text{longitudinal swelling rate (A) of the adhesive layer (220)} = (A2 - A1)/A1 \times 100$$

wherein, in Equation 1,
A1 is a longitudinal length of the adhesive layer (220) before impregnation with an electrolyte solution, and
A2 is a longitudinal length of the adhesive layer (220) after impregnation with the electrolyte solution;

[Equation 2]

$$\text{longitudinal swelling rate (B) of the substrate layer (210)} = (B2 - B1)/B1 \times 100$$

wherein, in Equation 2,
B1 is a longitudinal length of the substrate layer (210) before impregnation with the electrolyte solution, and
B2 is a longitudinal length of the substrate layer (210) after impregnation with the electrolyte solution.

4. The sealing tape (200) as claimed in claim 3, wherein a ratio (A/B) of the longitudinal swelling rate (A) of the adhesive layer (220) to the longitudinal swelling rate (B) of the substrate layer (210) is greater than 1 and less than or equal to 1.15.

5. The sealing tape (200) as claimed in any of the preceding claims 1 to 4, wherein a gel fraction of the adhesive layer (220) is greater than or equal to 70 wt%.

6. The sealing tape (200) as claimed in any of the preceding claims 1 to 5, wherein the adhesive layer (220) has a T-peel peel strength of greater than or equal to 60 gf/cm, measured at a peeling speed of 60 mm/min and a peeling angle of 180 degrees, with respect to a substrate to be attached.

7. The sealing tape (200) as claimed in any of the preceding claims 1 to 6, wherein the adhesive layer (220) comprises an acrylate-based adhesive.

8. The sealing tape (200) as claimed in claim 7, wherein the acrylate-based adhesive is a copolymer of 2-ethylhexyl acrylate and 4-hydroxybutylacrylate, which are crosslinked with an isocyanate-based crosslinking agent.

9. A rechargeable lithium battery (100), comprising:

a cylindrical battery case (50);
a wound-type electrode assembly in the cylindrical battery case (50);
the sealing tape (200) as claimed in any of the preceding claims 1 to 8 between an outermost layer of the wound-type electrode assembly and an inner layer thereof; and
an electrolyte solution impregnated in the wound-type electrode assembly and the sealing tape (200).

10. The rechargeable lithium battery (100) as claimed in claim 9, wherein the wound-type electrode assembly is a stack in which a positive electrode (10), a separator (30), and a negative electrode (20) are sequentially stacked and wound so that the negative electrode (20) is the outermost layer.

11. The rechargeable lithium battery (100) as claimed in claim 9 or 10, wherein a length of the sealing tape (200) is 0.8 times to 1.5 times a circumference of the wound-type electrode assembly.

12. The rechargeable lithium battery (100) as claimed in any of the preceding claims 9 to 11, wherein a portion of the sealing tape (200) is exposed to an outside of the outermost layer of the wound-type electrode assembly.

13. The rechargeable lithium battery (100) as claimed in any of the preceding claims 9 to 12, wherein a portion of the sealing tape (200) is between the outermost layer of the wound-type electrode assembly and the inner layer thereof, and a rest of the sealing tape (200) is between the outermost layer of the wound-type electrode assembly and the cylindrical battery case (50).

FIG. 1

200

210

220

FIG. 2

210

220

FIG. 3

| | Europäisches Patentamt European Patent Office Office européen des brevets | **EUROPEAN SEARCH REPORT** | Application Number EP 24 18 0364 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 213 983 B (AQUILARIA SINENSIS ZHONGZHONG NEW MATERIAL TECH CO LTD ET AL.) 28 February 2023 (2023-02-28) | 1-7,9-13 | INV. H01M10/0566 H01M10/052 |
| A | * comparative example 1, test cases 3 and 4; claim all * | 8 | C08F218/08 C09J7/30 C09J9/00 C09J123/08 |
| X | WO 2013/042727 A1 (TOSOH CORP [JP]) 28 March 2013 (2013-03-28) | 1-6 | C09K21/06 H01M10/0587 |
| A | * claim all * | 7-13 | H01M50/184 H01M50/186 |
| A | CN 114 854 319 A (SHENZHEN RUNSEA ELECTRONIC CO LTD) 5 August 2022 (2022-08-05) * the whole document * | 1-13 | H01M50/193 H01M50/197 H01M50/198 |

| | |
|---|---|
| | TECHNICAL FIELDS SEARCHED (IPC) |
| | H01M C08J C08F G02F C09J C09K |

The present search report has been drawn up for all claims

| Place of search | Date of completion of the search | Examiner |
|---|---|---|
| Munich | 10 October 2024 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 0364

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2024

| Patent document cited in search report | | Publication date | Patent family member(s) | | Publication date |
|---|---|---|---|---|---|
| CN 114213983 | B | 28-02-2023 | CN | 114213983 A | 22-03-2022 |
| | | | WO | 2023093168 A1 | 01-06-2023 |
| WO 2013042727 | A1 | 28-03-2013 | JP | 5974766 B2 | 23-08-2016 |
| | | | JP | 2014025047 A | 06-02-2014 |
| | | | TW | 201321456 A | 01-06-2013 |
| | | | WO | 2013042727 A1 | 28-03-2013 |
| CN 114854319 | A | 05-08-2022 | NONE | | |

EPO FORM P0459

For more details about this annex : see Official Journal of the European Patent Office, No. 12/82